# EUROPEAN PATENT APPLICATION

(11) **EP 2 463 743 A1**
(43) Date of publication of application: **13.06.2012**
(21) Application number: 10194317.3
(22) Date of filing: 09.12.2010
(51) Int. Cl.: G06F 1/16

(54) **An apparatus for storage of one or more portable computers**

(71) Applicant: Leba Innovations A/S, 4690 Haslev (DK)
(72) Inventor: Christiansen, Lasse, 4880, Nysted (DK)
(74) Representative: Inspicos A/S

(57) **Abstract**

A storage apparatus for storage of one or more portable computers, the storage device comprising: a housing; at least one shelve each of which defines at least one computer fixture for accommodation of a portable computer, and at least one connector for electrically connecting the portable computer to a power supply and/or to a computer network, wherein the connector is secured relative to the computer fixture such that a portable computer when inserted into the computer fixture automatically is connected to the power source and/or the computer network.

A method of retaining connector in a predetermined position in a storage apparatus for storage of one or more portable computers, the method comprising the steps of: providing the computer fixture, the connector fixture and the connector; moving the connector fixture into a predetermined position; and locking the locking mechanism so as to retain the connector fixture in the desired position.

## Description

### FIELD OF THE INVENTION

The present invention relates to a storage apparatus for storage of one or more portable computers, in which a connector is secured relative to a computer fixture such that a portable computer when inserted into the computer fixture automatically is connected to the power source and/or the computer network. Moreover, the present invention relates to a method of retaining or changing the position of connector in a predetermined position in a storage apparatus for storage of one or more portable computers.

### BACKGROUND OF THE INVENTION

In connection with education and other activities where a plurality of portable computers are used, it is often a time consuming process to connect all the computers to an electric power source for recharging the battery and/or to connect the computers to a computer network such that the computers can be updated and/or reconfigured. The reason is that a connector for connecting the computer to an electrical network or a computer network must be plugged into each computer manually. In cases wherein each computer must be connected to both an electrical power source and a computer network, the process is even more time consuming.

Thus, it is an object of preferred embodiments of the present invention to provide a system or a method in which the connector (s) is/are connected to the portable computer automatically, e.g. when the portable computer is inserted into a storage device for storing/accommodating the portable computers.

Moreover, it is an object of the present invention to provide a system in which the position of the connector relative to a shelve may be changed such that the shelve for storing the portable device may be utilized for a plurality of different devices.

### DESCRIPTION OF THE INVENTION

In a FIRST aspect, the present invention relates to a storage apparatus for storage of one or more portable computers, the storage device comprising:
- at least one shelve each of which defines an access position and a storage position and which defines at least one computer fixture for accommodation of a portable computer, and
- at least one connector for electrically connecting the portable computer to a power supply and/or to a computer network,
wherein the connector is arranged such that a portable computer when inserted into the computer fixture is connected to the power source and/or the computer network when the shelve is positioned in its storage position.

One advantage of the present invention is that electrical devices such as a personal computer may be recharged while being stored in the storage apparatus. Alternatively, or as a supplement, the personal computer may be connected to a data network. In the latter situation, the computer may be software updated during storage.

Another advantage of the present invention is that a user will only need to connect one plug to a data network and/or one plug to a power supply e.g. 220V mains, in order for any of the devices in the storage apparatus to be connected to said data network and/or power supply.

Yet another advantage is that a user inserting a computer into the storage apparatus automatically connects the computer to the power supply and/or the data network. Thus, any user will automatically connect the computer when inserting the computer in the storage apparatus, whereby the need for a system administrator or any other IT personnel to connect the computers individually is eliminated.

In the context of the present invention the term "portable computer" shall be understood as a Personal computer (PC) using any operating system such as Windows, Linix, Mac OS or any other operating system. Moreover, the term shall also cover portable devices such as a GPS-device, a telephone such as a smart phone, a computer tablet such as an Ipad. In one embodiment, the term "portable computer" shall cover any rechargeable electrical device comprising a computer processing means.

In one embodiment, the storage apparatus may be a mobile apparatus. The mobile apparatus may comprise wheels so as to allow the mobile apparatus to be moved. In the context of the present invention, the term "mobile apparatus" shall be understood as any device which is movable by one or a few persons without use of any tools or machines for propelling the movable apparatus.

As an alternative to wheels the storage apparatus may be secured to a conveyer system or a rail system. In one embodiment, the storage apparatus is adapted to be secured to a structure such as a wall, so as to prevent the storage apparatus from being stolen. In one embodiment, the storage apparatus allows for any wheel or other means for moving the apparatus from a first to a second place, to be removed or to be inactivated. By inactivated shall be understood that the configuration of these wheels or means for moving the apparatus is changed from a state in which the apparatus can move, to a state in which the apparatus cannot move. As an example, the wheels may be locked for rotation.

The storage apparatus may comprise a housing which may accommodate the at least one shelve. The shelves may be arranged to be slidable between a storage position in which they are located inside the housing and an access position in which a user is able to insert/place a portable device into/onto the fixture of the shelve. The shelves may be arranged in rows and columns. In one embodiment, the storage apparatus comprises shelves on both sides of the storage apparatus.

The housing of the storage apparatus may be made from a metal material, such as steel and/or from a plastic material. Similarly, the shelves may be made from a metal and/or a plastic material.

At least one of the shelves may define one or more computer fixtures, for accommodation of a portable computer. In one embodiment, one or more of the shelves define at least two computer fixtures, such as three, such as four, such as five, such as six etc.

Moreover, the storage apparatus may comprise one or more connectors for electrically connecting the portable computer to a power supply and/or to a computer network. In one embodiment, the one connector is provided for connecting the portable computer to an electrical power source. The latter connector may be a plug which is inserted into the portable computer. Alternatively, the connector may be adapted to wirelessly supply the electrical energy to the portable computer, e.g. by means of electromagnetism. In one embodiment, the connector is adapted to connect the computer to a computer network, e.g. by means of plug which is inserted into the portable computer. This plug may form part of, or be connected to an electrical power source so as to connect to the computer network via the electrical power network. In one embodiment, the portable computer is connected to the computer network via a wireless connection.

In order to connect the portable computer to the connector, the connector may be secured relative to the computer fixture such that a portable computer when inserted into the computer fixture automatically is connected to the power source and/or the computer network. In one embodiment, the connector is arranged such that the portable computer is slid into contact with the connector when the portable computer is slid into the computer fixture, e.g. such that the portable computer is moved in a plane defined by a screen of the computer or a keyboard of the computer in order to be slid into contact with the connector.

In one embodiment, the portable computer is moved in a direction transverse such as orthogonal, to a plane defined by the screen and/or the keyboard of the portable computer. In order to ensure that the connector of the storage apparatus and the corresponding connector of the portable computer are aligned, the fixture may comprise alignment means, which during insertion of the portable computer are adapted to abut a lateral surface of the portable computer.

In one embodiment, the connector is secured relative to the computer fixture such that a portable computer, when inserted into the computer fixture, automatically is connected to the power source and/or the computer network.

In yet another embodiment, the connector is arranged such with respect to the shelve that the portable computer automatically is connected to the power source and/or the computer network, when the portable computer is positioned in the computer fixture and the shelve is moved from its access position to its storage position.

As an example, the storage apparatus may be designed such that the portable computer is positioned on the shelve when the shelve is in its accessible state. Subsequently, when the shelve is moved (e.g. pushed) into its storage stage, the portable computer is brought into contact with the connector. In one embodiment, the connector is positioned on a backwall of the storage apparatus and is arranged such that when the shelve is moved into its storage stage, the portable computer is moved into contact with the connector.

In one embodiment, the storage apparatus comprises a first and a second computer fixture, the first computer fixture being adapted to accommodate a first portable computer with a first geometry, and the second computer fixture being adapted to accommodate a second portable computer with a second geometry. In one embodiment, the first portable computer is longer than the second computer or vice versa. In one embodiment, the first portable computer is wider than the second computer, or vice versa. In one embodiment, the first portable computer is thicker than the second portable computer. In one embodiment, the first geometry is different than the second geometry. As an example, the first portable computer may be a laptop computer with a screen which is pivotable relative to a base part comprising a keyboard, while the second portable computer is a tablet computer with a screen and no physical keyboard.

In order to ensure that the connector(s) is/are provided in a predetermined position, at least one of the computer fixtures may comprise a connector fixture which is adapted to retain the connector relative to the computer fixture. In one embodiment, the connector fixture is adapted to provide one single predetermined position in which the connector may be retained. In another embodiment, the connector fixture defines a predetermined number of positions in which the connector may be provided, such as two predetermined positions, such as three predetermined positions, such as four predetermined positions.

In one embodiment, the connector fixture comprises a locking mechanism for locking the connector fixture relative to the computer fixture in a predetermined position. When the connector fixture is locked or secured relative to the computer fixture, it may be prevented that the connector changes position prior to or during insertion of the portable computer into the computer fixture. It will be appreciated that in order for the system according to the present invention to be advantageous i.e. in order for the system to save time by eliminating the process of manually inserting the connector into the portable computer by hand, the connector must remain in its predetermined position. If the connector changes position, the portable computer cannot be easily inserted into the fixture and will thus in effect cause the process of connecting the portable computer to the connector to be even more time consuming as the portable computer, upon an unsuccessful insertion in the computer fixture, must be removed and the connector inserted manually.

In order to allow a user to change the position of the connector, the locking mechanism may define a locked state in which the connector fixture is locked for movement relative to the computer fixture, and an un-locked state in which the connector fixture is movable relative to the computer fixture. By allowing the connector to change position or to be replaced by another connector (e.g. for another kind/brand of computer), the computer fixture and the connector fixture may be used for a plurality of different brands of computers. This provides the advantage that the users need not keep a stock of different geometries of the computer fixture and the connector fixture.

In one embodiment, the connector fixture is movable within a predetermined area relative to the computer fixture when the locking mechanism is in its un-locked state. As an example, the connector fixture may be movable within a predetermined plane relative to the computer fixture when the locking mechanism is in its un-locked state. As an example the plane may define a right angle with a plane defined by the upper surface of the shelve. Alternatively, or as a supplement the plane may define a right angle with the upper surface of the portable computer, when the portable computer is the storage position. In yet another example the plane may be parallel with a lateral surface of the portable computer, when the portable computer is the storage position.

Moreover, the connector may be retained relative to the connector fixture and/or the computer fixture when the locking mechanism is in its locked state. Moreover, the connector may be movable and/or removable relative to the connector fixture and/or the computer fixture when the locking mechanism is in its un-locked state.

Most portable computers comprise support members on their lower surface. The purpose of these support members is to prevent the portable computer from moving relative to the table or surface on which the portable computer is resting. Another purpose of these support members is to space the portable computer apart from the table/surface such that enable ventilation of the lower surface of the portable computer. However these support members have a tendency to fall off. When this happens, the computer changes position relative to the surface/table. In relation to the storage apparatus, this creates the problem, that the portable computer is not aligned correctly relative to the connector fixture. In order to solve this problem, the computer fixture may in one embodiment define one or more detachable and re-attachable space defining elements, each of which spaces a lower surface of the portable computer away from an upper surface of the shelve such that any support members provided on the lower surface of the portable computer are not resting on the upper surface of the shelve.

In one embodiment, the space defining elements of the computer fixture are designed such that an upper surface of the shelve is parallel with an upper surface of the portable computer, when the portable computer is the storage position. Alternatively, or as a supplement, the space defining elements of the computer fixture are designed such that a connector of the computer (which is adapted to be connected with the connector of the external cabel) defines an axis which is parallel to the upper surface of the shelve, when the portable computer is the storage position.

In yet another embodiment, a biasing means is arranged to bias the connector towards the portable computer, when the connector is connected to the portable computer. This provides the advantage that the connector is forced into contact with the portable computer.

In a SECOND aspect the present invention relates to a method of retaining a connector in a predetermined position in a storage apparatus for storage of one or more portable computers, the storage device comprising: a shelve which defines a computer fixture for accommodation of a portable computer, and a connector for electrically connecting the portable computer to a power supply and/or to a computer network, wherein the connector is secured relative to the computer fixture such that the portable computer when inserted into the computer fixture automatically is connected to the power source and/or the computer network, wherein the computer fixture comprises a connector fixture which is adapted to retain the connector relative to the computer fixture, the connector fixture comprises a locking mechanism defining a locked state in which the connector fixture is locked for movement relative to the computer fixture, and an un-locked state in which the connector fixture is movable relative to the computer fixture, the method comprising the steps of:
- providing the computer fixture, the connector fixture and the connector;
- moving the connector fixture into a predetermined position; and
- locking the locking mechanism so as to retain the connector fixture in the desired position.

It will be appreciated that the invention according to the second aspect, may comprise any combination of features and elements of the invention according to the first aspect.

In one embodiment, the method further comprises the step of:
- bringing the locking mechanism into the un-locked state.

In one embodiment, the step of bring the locking mechanism into the un-locked state precedes the step of moving the connector fixture into a predetermined position.

Moreover the step of 'providing the computer fixture, the connector fixture and the connector' may precede the step of 'moving the connector fixture into a predetermined position'. Alternatively, or as a supplement, the step of 'moving the connector fixture into a predetermined position' may precede the step of 'locking the locking mechanism so as to retain the connector fixture in the desired position'.

### BRIEF DESCRIPTION OF THE FIGURES

The invention will now be described in further detail with reference to the figures in which:
Fig. 1 discloses an assembly drawing of a shelve according to the present invention,

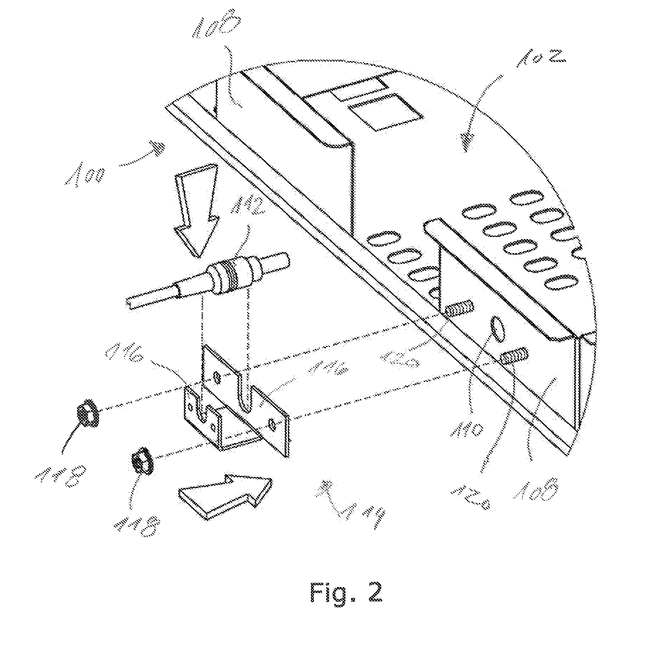

Figs. 2 and 3 disclose a detail of the connector fixture according to one embodiment, and
Fig. 4 discloses the process of connecting the portable computer with the connector.

### DETAILED DESCRIPTION OF THE INVENTION

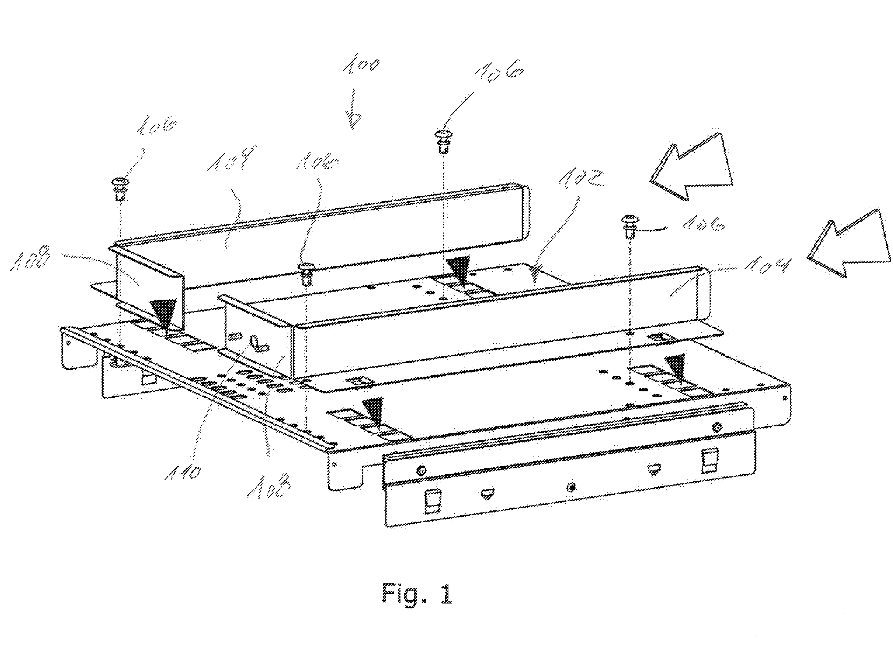

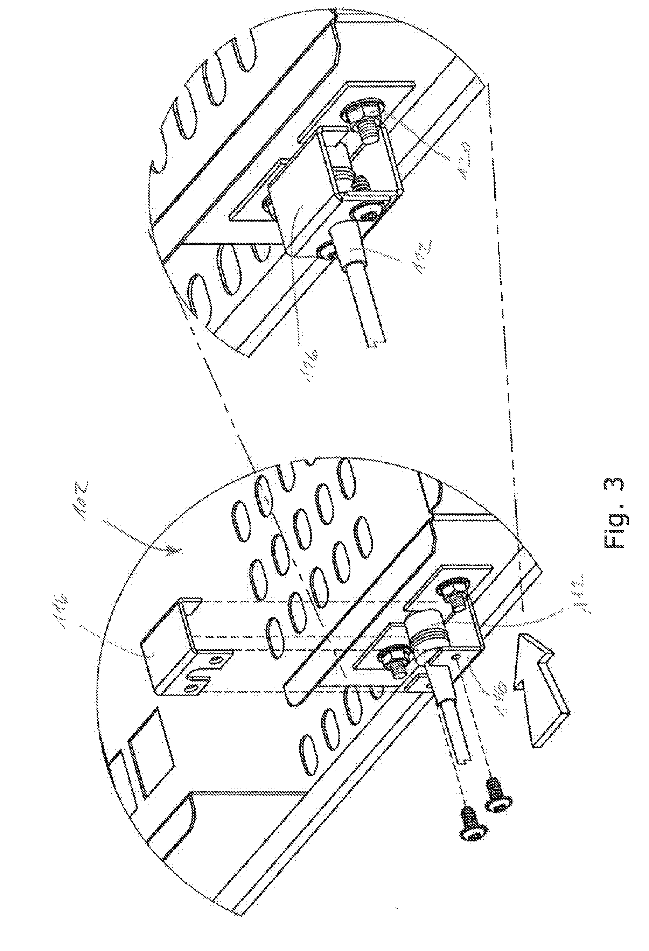

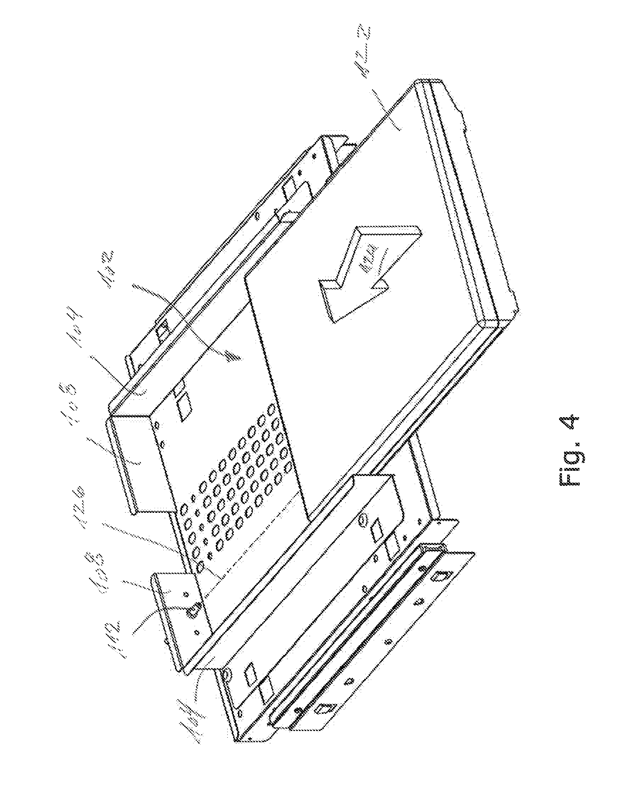

Fig. 1 discloses a shelve 100 defining an upper surface 102 on to which guiding members 104 are secured by means of screws 106. The guiding members 104 define end surfaces 108 which the portable computer (not shown) is forced into contact with, when it is inserted, this is described in further detail in relation to Fig. 4. One of the end surfaces 108 define a connector passage 110, through which the connector 112 is inserted such that it is retained in a predetermined position relative to the end surface 108. A connector fixture 114 is defined by the connector passage 110 and connector retaining members 116 which force the connector into contact with the end surface 108 by means of bolts 118 which are screwed onto screws 120. This is illustrated in Fig. 3.

Fig. 4 illustrates insertion of a portable computer 122 which is placed onto the upper surface 102 of the shelve 100 and slit in the direction of the arrow 124. The provision of the guiding members 104 causes the connector 112 to be inserted into the corresponding plug (not shown) of the portable computer. This is illustrated by the dotted line 126.

## Claims

1. A storage apparatus for storage of one or more portable computers, the storage device comprising:
- at least one shelve which defines an access position and a storage position and which defines at least one computer fixture for accommodation of a portable computer, and
- at least one connector for electrically connecting the portable computer to a power supply and/or to a computer network,
wherein the connector is arranged such that a portable computer when inserted into the computer fixture is connected to the power source and/or the computer network when the shelve is positioned in its storage position.

2. A storage apparatus according to claim 1, wherein the connector is secured relative to the computer fixture such that a portable computer when inserted into the computer fixture automatically is connected to the power source and/or the computer network.

3. A storage apparatus according to claim 1 or 2, wherein the connector is arranged such with respect to the shelve that the portable computer automatically is connected to the power source and/or the computer network, when the portable computer is positioned in the computer fixture and the shelve is moved from its access position to its storage position.

4. A storage apparatus according to any of the preceding claims, comprising a first and a second computer fixture, the first computer fixture being adapted to accommodate a first portable computer with a first geometry, and the second computer fixture being adapted to accommodate a second portable computer with a second geometry.

5. A storage apparatus according to any of the preceding claims, wherein at least one of the computer fixtures comprises a connector fixture which is adapted to retain the connector relative to the computer fixture.

6. A storage apparatus according to claim 5, wherein the connector fixture comprises a locking mechanism for locking the connector fixture relative to the computer fixture in a predetermined position.

7. A storage apparatus according to claim 6, wherein the locking mechanism defines a locked state in which the connector fixture is locked for movement relative to the computer fixture, and an un-locked state in which the connector fixture is movable relative to the computer fixture.

8. A storage apparatus according to claim 7, wherein the connector fixture is movable within a predetermined area relative to the computer fixture when the locking mechanism is in its un-locked state.

9. A storage apparatus according to claim 7 or 8, wherein the connector fixture is movable within a predetermined plane relative to the computer fixture when the locking mechanism is in its un-locked state.

10. A storage apparatus according to any of claims 7-9, wherein the connector is retained relative to the connector fixture and/or the computer fixture when the locking mechanism is in its locked state and wherein the connector is movable and/or removable relative to the connector fixture and/or the computer fixture when the locking mechanism is in its un-locked state.

11. A storage apparatus according to any of the preceding claims, wherein the computer fixture defines one or more detachable and re-attachable space defining elements, each of which spaces a lower surface of the portable computer away from an upper surface of the shelve such that any support members provided on the lower surface of the portable computer are not resting on the upper surface of the shelve.

12. A storage apparatus according to any of the preceding claims, wherein a biasing means is arranged to bias the connector towards the portable computer, when the connector is connected to the portable computer.

13. A method of retaining a connector in a predetermined position in a storage apparatus for storage of one or more portable computers, the storage device comprising: a shelve which defines a computer fixture for accommodation of a portable computer, and a connector for electrically connecting the portable computer to a power supply and/or to a computer network, wherein the connector is secured relative to the computer fixture such that the portable computer when inserted into the computer fixture automatically is connected to the power source and/or the computer network, wherein the computer fixture comprises a connector fixture which is adapted to retain the connector relative to the computer fixture, the connector fixture comprises a locking mechanism defining a locked state in which the connector fixture is locked for movement relative to the computer fixture, and a un-locked state in which the connector fixture is movable relative to the computer fixture, the method comprising the steps of:
- providing the computer fixture, the connector fixture and the connector;
- moving the connector fixture into a predetermined position; and
- locking the locking mechanism so as to retain the connector fixture in the desired position.

14. A method according to claim 13, further comprising the step of:
- bringing the locking mechanism into the un-locked state.

15. A method according to claim 13, wherein the step of bring the locking mechanism into the un-locked state precedes the step of moving the connector fixture into a predetermined position.
